# EUROPEAN PATENT SPECIFICATION

(11) **EP 0 900 698 B1**
(45) Date of publication and mention of the grant of the patent: **16.04.2003**
(21) Application number: 97202730.4
(22) Date of filing: 04.09.1997
(51) Int. Cl.: B60R 16/02

(54) **Ignition system protection system**
Zündungsschutzsystem
Système de protection d'un système d'allumage.

(43) Date of publication of application: 10.03.1999
(73) Proprietor: Delphi Automotive Systems Deutschland GmbH, D-42369 Wuppertal (DE)
(72) Inventor: Drescher, Thomas, 42897 Remscheid (DE); Tausch, Norbert, 42659 Solingen (DE)
(74) Representative: Denton, Michael John

(56) References cited:
- EP-A- 0 535 712
- DE-U- 8 910 070
- DE-U- 9 111 099
- DE-U- 9 308 557

## Description

### Technical Field

The present invention relates to a protection system for the ignition system in a motor vehicle.

### Background of the Invention

Ignition cables and the associated connectors of the ignition system in the engine compartment of a motor vehicle have been known to be gnawed by rodents, such as pine martens, with the ultimate effect of preventing the vehicle from moving. Providing protection sleeving around the cables is not always effective and still leaves the connectors exposed. DE-U-8910070 describes the use of beads to protect cables.

### Summary of the Invention

The object of the present invention is to provide a protection system for the ignition cables and connectors of a motor vehicle which substantially reduces the risk of such damage by rodents.

A protection system for ignition cables and connectors in a motor vehicle in accordance with the present invention comprises a protective cap for substantially surrounding the circumferential surface of each connector; cable ducting for surrounding part of the cables between the connectors; and annular beads for surrounding the cables between the cable ducting and at least some of the connectors.

The present invention reduces the risk of a rodent gnawing the cables or connectors of the ignition system.

### Brief Description of the Drawings

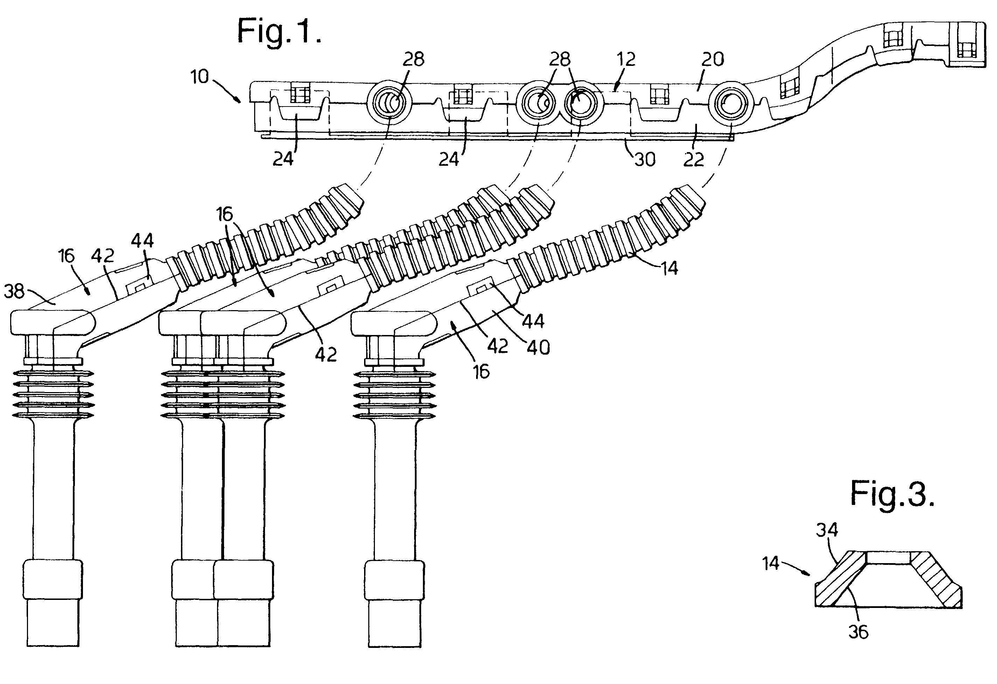

The present invention will now be described, by way of example, with reference to the accompanying drawings, in which:-
Figure 1 is a side view of part of a protection system in accordance with the present invention;

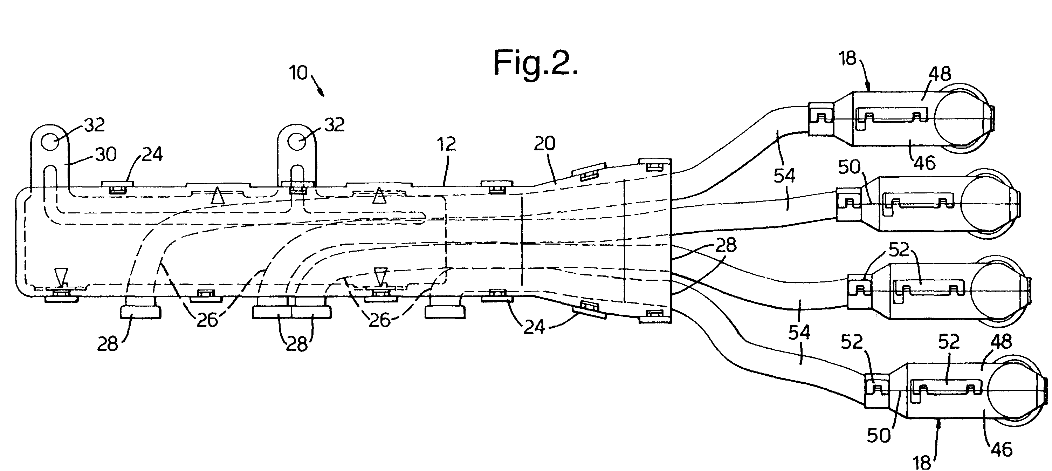

Figure 2 is a top view of part of the protection system partly shown in Figure 1; and
Figure 3 is a cross-sectional view of a bead of the protection system of Figures 1 and 2.

### Description of the Preferred Embodiment

Referring to the drawings, the protection system 10 for the cables, spark plug connectors, and coil connectors of the ignition system of a motor vehicle, includes cable ducting 12, beads 14, protective caps 16 for the spark plug connectors, and protective caps 18 for the coil connectors. The ducting 12, beads 14, and protective caps 16,18 are preferably formed from hard plastics material (such as polyamid 6 reinforced with glass fibre) which is resistant to gnawing by pine martens and other rodents.

The cable ducting 12 is preferably formed in two parts 20,22 which make a snap fit together by way of resilient tabs 24. At least one of the two parts 20,22 preferably has channels 26 formed internally thereof which provide guides for the ignition cables through the ducting 12. The channels 26 extend between openings 28 formed in the ducting 12 for entry and exit of the ignition cables. A mounting plate 30 is preferably attached to one 22 of the parts of the ducting 12 and has mounting apertures 32 therein for securing the cable ducting to any appropriate point in the engine compartment of the motor vehicle.

The beads 14 are annular in shape and the ignition cables passes through the beads, which are positioned next to one another along the cables. The beads 14 preferably have an external frustoconical front portion 34 and a corresponding internal frustoconical rear portion 36 such that adjacent beads can partially overlap and allow flexing of the ignition cables with reduced risk of exposing the cable. The beads 14 are used to surround the ignition cables between the protective caps 16 for the spark plug connectors and the cable ducting 12.

Each protective cap 16 for each spark plug connector is substantially tubular and is preferably formed in two parts 38,40 which make a snap fit together along axially extending edges 42, by way of resilient tabs 44, to substantially surround the circumferential surface of the spark plug connector. Similarly, each protective cap 18 for each coil connector is substantially tubular and is preferably formed in two parts 46,48 which make a snap fit together along axially extending edges 50, by way of resilient tabs 52, to substantially surround the circumferential surface of the coil connector.

Between the protective caps 18 for the coil connectors and the cable ducting, the ignition cables can be protected by beads, as described above, or by corrugated tubing 54 of plastics material.

The present invention therefore provides a system for protecting the cables and connectors of an ignition system of a motor vehicle, reducing the risk of gnawing of the cables and/or connectors by rodents.

## Claims

1. A protection system for ignition cables and connectors in a motor vehicle comprising a protective cap (16,18) for substantially surrounding the circumferential surface of each connector; and cable ducting (12) for surrounding part of the cables between the connectors; **characterised by** annular beads (14) for surrounding the cables between the cable ducting and at least some of the connectors, wherein each bead (14) has an external frustoconical front portion (34) and an internal frustoconical rear portion (36) such that adjacent beads can partially overlap when positioned around a cable.

2. A protection system as claimed in Claim 1, wherein each protection cap (16,18) is substantially tubular and formed in two parts (38,40,46,48), the two parts making a snap fit together along axially extending edges (42,50) around the circumferential surface of each connector.

3. A protection system as claimed in Claim 1 or Claim 2, wherein the cable ducting (12) is formed in two parts (20,22), the two parts making a snap fit together.

4. A protection system as claimed in Claim 3, wherein at least one of the two parts (20,22) of the cable ducting (12) has channels (26) formed internally for guiding the cables through the ducting.

5. A protection system as claimed in any one of the preceding Claims, wherein a mounting plate (30) is secured to the cable ducting (12).

## Patentansprüche

1. Schutzsystem für Zündkabel und Stecker in einem Kraftfahrzeug mit einer Schutzkappe (16, 18), die die Umfangsfläche jedes Steckers im Wesentlichen umgibt; und einer Kabeldurchführung (12), die einen Teil der Kabel zwischen den Steckern umgibt; **gekennzeichnet durch** ringförmige Wülste (14), die die Kabel zwischen der Kabeldurchführung und mindestens einigen Steckern umgeben, wobei jeder Wulst (14) einen außen liegenden kegelstumpfförmigen vorderen Abschnitt (34) und einen innen liegenden kegelstumpfförmigen hinteren Abschnitt (36) aufweist, so dass benachbarte Wülste sich teilweise überlappen können, wenn sie um ein Kabel herum angeordnet sind.

2. Schutzsystem nach Anspruch 1, wobei jede Schutzkappe (16, 18) im Wesentlichen rohrförmig und aus zwei Teilen (38, 40, 46, 48) gebildet ist, wobei die beiden Teile zusammen entlang sich axial erstreckender Ränder (42, 50) um die Umfangsfläche jedes Steckers herum einen Rastsitz bilden.

3. Schutzsystem nach Anspruch 1 oder Anspruch 2, wobei die Kabeldurchführung (12) aus zwei Teilen (20, 22) gebildet ist, wobei die beiden Teile zusammen einen Rastsitz herstellen.

4. Schutzsystem nach Anspruch 3, wobei mindestens eines der beiden Teile (20, 22) der Kabeldurchführung (12) Kanäle (26) aufweist, die im Inneren gebildet sind, um die Kabel durch die Durchführung hindurch zu führen.

5. Schutzsystem nach einem der vorhergehenden Ansprüche, wobei eine Montageplatte (30) an der Kabeldurchführung (12) befestigt ist.

## Revendications

1. Système de protection des câbles et connecteurs d'allumage d'une automobile comprenant un capuchon de protection (16, 18) pour entourer sensiblement toute la surface circonférentielle de chaque connecteur ; et une gaine de câble (12) pour entourer une partie des câbles entre les connecteurs ; **caractérisé par** des cordons de renforcement (14) pour entourer les câbles entre la gaine du câble et au moins certains des connecteurs, dans lequel chaque cordon de renforcement (1) possède une partie avant (34) extérieure de forme tronconique et une partie arrière (36) intérieure de forme tronconique telles que les cordons de renforcement adjacents puissent en partie se chevaucher lorsqu'ils sont positionnés autour d'un câble.

2. Système de protection selon la revendication 1, dans lequel chaque capuchon de protection (16, 18) est sensiblement tubulaire et est constitué de deux parties (38, 40, 46, 48), les deux parties s'emboîtant l'une dans l'autre par encliquetage le long des bords (42, 50) s'étendant axialement autour de la surface circonférentielle de chaque connecteur.

3. Système de protection selon la revendication 1 ou 2, dans lequel la gaine de câble (12) est constituée de deux parties (20, 22), les deux parties s'emboîtant l'une dans l'autre par encliquetage.

4. Système de protection selon la revendication 3, dans lequel au moins une des deux parties (20, 22) de la gaine de câble (12) possède des canaux (26) qui sont formés intérieurement afin de guider les câbles à travers la gaine.

5. Système de protection selon l'une quelconque des revendications précédentes, dans lequel une plaque d'assemblage (30) est fixée à la gaine (12) de câble.
